# EUROPEAN PATENT SPECIFICATION

(11) **EP 4 386 602 B1**
(45) Date of publication and mention of the grant of the patent: **04.11.2026**
(21) Application number: 23216553.0
(22) Date of filing: 14.12.2023
(51) Int. Cl.: G06F 21/57, G06F 21/62

(54) **DEVICE CONTROL TRANSFER**
VORRICHTUNGSSTEUERUNGSÜBERTRAGUNG
TRANSFERT DE COMMANDE DE DISPOSITIF

(30) Priority: 14.12.2022 US 202263432415 P; 30.10.2023 US 202318497000
(43) Date of publication of application: 19.06.2024
(73) Proprietor: Mellanox Technologies, Ltd., 2069200 Yokneam (IL)
(72) Inventor: EILAM, Nir, 2069200 Yokneam (IL); ITKIN, Yuval, 2069200 Yokneam (IL); KUPERSHMIDT, Haim, 2069200 Yokneam (IL); EDERY, Yigal, 2069200 Yokneam (IL); STERN, Uriya, 2069200 Yokneam (IL); SHAHAR, Boaz, 2069200 Yokneam (IL); SFADIA, Mor, 2069200 Yokneam (IL)
(74) Representative: Kramer, Dani

(56) References cited:
- US-A1- 2016 019 050
- US-A1- 2021 073 003
- US-A1- 2022 058 270
- PALMER ELAINE ET AL: "Ownership and Control of Firmware in Open Compute Project Devices", 9 November 2018 (2018-11-09), pages 1 - 8, XP093149535, Retrieved from the Internet <URL:https://web.archive.org/web/20210616084234if_/https://www.opencompute.org/documents/ibm-white-paper-ownership-and-control-of-firmware-in-open-compute-project-devices> [retrieved on 20240409]

## Description

The present application claims benefit of US Provisional Patent Application S/N 63/432,415 of Eilam, et al., filed 14 December 2022.

### FIELD OF THE INVENTION

The present invention relates to computer systems, and in particular, but not exclusively to, device control transfer.

### BACKGROUND

Secure devices may use cryptographic authentication of software (e.g., firmware) as a condition to execute software on the devices. For example, a device may check the digital signature of software using a public key to determine that the software is approved for running on the device.

Control of the device is also known as "ownership" of the device. Ownership may imply one or more of the following: the ability to use the device to run software code coming from the "owner", i.e., signed by the credentials of the owner; blocking any 3rd party from loading their cryptographic credentials to the device, unless authorized by the "owner"; and the ability to authorize firmware authentication to a 3rd party, e.g., by signing a certificate for a 3rd party (e.g. a Cloud Solution Provider (CSP) customer), which is part of a 3rd party customer certificate chain used to authenticate the 3rd-party software.

At times, the owner may want to transfer ownership of a device to another entity in which the new owner acquires all ownership privileges, and the previous owner generally loses the ownership privileges of the device. Palmer, Elaine & Visegrady, Tamas & Osborne, Michael. (2018), Ownership and Control of Firmware in Open Compute Project Devices, relates to methods of establishing, representing, and transferring ownership. It provides examples of ownership transfers throughout the lifecycle of a device.

### SUMMARY

The invention is defined by the claims. In order to illustrate the invention, aspects and embodiments which may or may not fall within the scope of the claims are described herein.

There is provided in accordance with an embodiment of the present disclosure, a system including a device including a memory to store a first public key indicating security ownership of the device by a first owner, an interface to receive a signature of an intermediate public key signed by a first owner signing service with a first private key, which forms a first key pair with the first public key, and processing circuitry to load the intermediate public key in the memory in preparation for transferring ownership of the device from the first owner, responsively to authenticating the signature of the intermediate public key with the first public key, and remove the first public key from the memory, and wherein the interface is to receive a second public key and a signature of the second public key signed by a second owner signing service with an intermediate private key, which forms an intermediate key pair with the intermediate public key, the second public key and a second private key forming a second key pair, the processing circuitry is to load the second public key in the memory indicating ownership of the device has been transferred to the second owner responsively to authenticating the signature of the second public key with the intermediate public key, and the processing circuitry is to remove the intermediate public key from the memory.

Further in accordance with an embodiment of the present disclosure the processing circuitry is to overwrite the first public key in the memory with the intermediate public key while loading the intermediate public key in the memory.

Still further in accordance with an embodiment of the present disclosure the processing circuitry is to prevent loading of any public key unauthenticated by a given loaded public key, and allows loading of a public key signed by a given private key paired with the given loaded public key.

Additionally in accordance with an embodiment of the present disclosure the processing circuitry is to purge firmware and certificates signed by the first private key from the memory.

Moreover, in accordance with an embodiment of the present disclosure, the system includes the first owner signing service to sign the intermediate public key with the first private key.

Further in accordance with an embodiment of the present disclosure, the system includes the second owner signing service to generate the second key pair, sign the second public key with the intermediate private key, and provide the second public key and the signature of the second public key to the device.

Still further in accordance with an embodiment of the present disclosure the processing circuitry is to overwrite the intermediate public key in the memory with the second public key while loading the second public key in the memory.

Additionally in accordance with an embodiment of the present disclosure the interface is to receive a certificate container signed with the second private key, and the processing circuitry is to load a certificate associated with the signed certificate container in the memory.

Moreover in accordance with an embodiment of the present disclosure the interface is to receive a signature of the firmware, and the processing circuitry is to store the firmware in the memory or execute the firmware, responsively to authenticating the signature of firmware with a public key of a leaf certificate in a certificate chain with a root certificate of the second owner.

Further in accordance with an embodiment of the present disclosure, the system includes a measuring device to perform measurements on the device after transferring the ownership of the device, and compare the measurements performed after transferring ownership of the device to measurements performed before transferring ownership of the device to confirm that the device has not been tampered with.

Still further in accordance with an embodiment of the present disclosure the processing circuitry is to perform first measurements of the device before transferring the ownership of the device, sign the first measurements, provide a first report of the signed first measurements to the second owner signing service, perform second measurements of the device after transferring the ownership of the device, sign the second measurements, and provide a second report of the signed second measurements to the second owner signing service.

Additionally in accordance with an embodiment of the present disclosure the second owner signing service is to compare the first report to the second report to confirm that the device has not been tampered with.

Moreover, in accordance with an embodiment of the present disclosure the interface is to receive the signature of the intermediate public key and a device list signed by the first owner signing service with the first private key, the device list including a device identification of the device, and the processing circuitry is to load the intermediate public key in the memory in preparation for transferring ownership of the device from the first owner, responsively to authenticating the signature of the intermediate public key and the device list with the first public key.

Further in accordance with an embodiment of the present disclosure the device list includes device identifications of multiple devices.

There is also provided in accordance with another embodiment of the present disclosure, a control transfer method, including storing a first public key indicating security ownership of a device by a first owner, receiving a signature of an intermediate public key signed by a first owner signing service with a first private key, which forms a first key pair with the first public key, loading the intermediate public key in a memory of the device in preparation for transferring ownership of the device from the first owner, responsively to authenticating the signature of the intermediate public key with the first public key, removing the first public key from the memory, receiving a second public key and a signature of the second public key signed by a second owner signing service with an intermediate private key, which forms an intermediate key pair with the intermediate public key, the second public key and a second private key forming a second key pair, loading the second public key in the memory indicating ownership of the device has been transferred to the second owner responsively to authenticating the signature of the second public key with the intermediate public key, and removing the intermediate public key from the memory.

Still further in accordance with an embodiment of the present disclosure, the method includes preventing loading of any public key unauthenticated by a given loaded public key, and allows loading of a public key signed by a given private key paired with the given loaded public key.

Additionally in accordance with an embodiment of the present disclosure, the method includes purging firmware and certificates signed by the first private key from the memory.

Moreover, in accordance with an embodiment of the present disclosure, the method includes receiving a certificate container signed with the second private key, and loading a certificate associated with the signed certificate container in the memory.

Further in accordance with an embodiment of the present disclosure, the method includes receiving a signature of the firmware, and storing the firmware in the memory or executing the firmware, responsively to authenticating the signature of firmware with a public key of a leaf certificate in a certificate chain with a root certificate of the second owner.

Still further in accordance with an embodiment of the present disclosure, the method includes performing measurements on the device after transferring the ownership of the device, and comparing the measurements performed after transferring ownership of the device to measurements performed before transferring ownership of the device to confirm that the device has not been tampered with.

Additionally in accordance with an embodiment of the present disclosure, the method includes performing first measurements of the device before transferring the ownership of the device, signing the first measurements, providing a first report of the signed first measurements to the second owner signing service, performing second measurements of the device after transferring the ownership of the device, signing the second measurements, and providing a second report of the signed second measurements to the second owner signing service.

Moreover, in accordance with an embodiment of the present disclosure, the method includes comparing the first report to the second report to confirm that the device has not been tampered with.

Further in accordance with an embodiment of the present disclosure, the method includes receiving the signature of the intermediate public key and a device list signed by the first owner signing service with the first private key, the device list including a device identification of the device, and loading the intermediate public key in the memory in preparation for transferring ownership of the device from the first owner, responsively to authenticating the signature of the intermediate public key and the device list with the first public key.

Still further, in accordance with an embodiment of the present disclosure the device list includes device identifications of multiple devices.

In one embodiment, a device includes a memory to store a first public key indicating security ownership of the device by a first owner, an interface to receive a signature of an intermediate public key signed by a first owner signing service with a first private key, and processing circuitry to load the intermediate public key in the memory, responsively to authenticating the signature, and remove the first public key from the memory, and wherein the interface is to receive a second public key and a signature of the second public key signed by a second owner signing service with an intermediate private key, the processing circuitry is to load a second public key in the memory indicating ownership has been transferred to the second owner responsively to authenticating the signature of the second public key with the intermediate public key, and remove the intermediate public key from the memory.

Any feature of one aspect or embodiment may be applied to other aspects or embodiments, in any appropriate combination. In particular, any feature of a method aspect or embodiment may be applied to an apparatus aspect or embodiment, and vice versa.

### BRIEF DESCRIPTION OF THE DRAWINGS

The present invention will be understood from the following detailed description, taken in conjunction with the drawings in which:
Fig. 1 is a block diagram view of an ownership transfer system constructed and operative in accordance with an embodiment of the present invention;
Figs. 2-4 are block diagram views of the system of Fig. 1 showing preparation of a device for ownership transfer;
Fig. 5 is a block diagram view of the system of Fig. 1 showing the device prepared for ownership transfer; and
Figs. 6-9 are block diagrams views of the system of Fig. 1 showing the device ownership being transferred to a second owner.

### DESCRIPTION OF EXAMPLE EMBODIMENTS

### OVERVIEW

At times, the owner of a device may want to transfer ownership of the device to another entity. As a result of this, a new owner acquires one or more, and typically all, of the ownership privileges described above, and the previous owner generally loses the ownership privileges. Ownership transfer is open to potential security threats, both for the original owner (e.g., using residual information left on the device by the original owner for a cyber-attack on devices still owned by them), and the new owner (e.g., by a man-in-the-middle, leaving some "trojan horse" firmware on the device before new owner assumes possession). Therefore, device ownership transfer (DOT) procedures are meant to address these threats and minimize the probability of their occurrence.

DOT procedures may include loading of the new owner Root of Trust (ROT) credentials in a secure manner. This may be achieved by the new owner ROT credentials being signed by the "old" owner or the manufacturer and loading them in a secure way, with the device validating the loading based on authenticating the signature of the ROT credentials signed by the "old" owner or the manufacturer. Such schemes present a challenge for cases where a large number of devices and/or products are to undergo the DOT procedure, since scalability is difficult when every device is subject to transfer of information between the new owner and the original owner or the manufacturer.

Therefore, embodiments of the present invention address at least some of the above drawbacks by providing a device ownership transfer system which allows secure transfer of a device from a first owner to a second owner while limiting direct interaction between the second owner and the first owner and even without the need for the second owner to request that a signing service of the first owner signs credentials or other items (such as firmware) of the second owner.

In some embodiments, the device ownership transfer may even take place through a dealer who receives the device from the first owner and transfers the device to the second owner with limited direct interaction between the first owner and the dealer or the dealer and the second owner with respect to credentials loading and similar security feature transfer.

In some embodiments, the first owner loads the device with "intermediate ROT" credentials, such as an intermediate public key which is signed by the private key of the first owner and loaded onto the device. The sensitive data (such as ROT credentials and firmware) of the first owner are removed from the device leaving the intermediate ROT credentials. The device is shipped to the second owner (optionally via a dealer) with the loaded intermediate public key. In some embodiments, the intermediate private key is provided to a signing service of the second owner via a secure channel from the first owner and optionally via the dealer.

In some embodiments, the intermediate public key (or any other public key loaded onto the device) may be securely stored in non-volatile memory of the device using encryption and/or only be accessible by internal secure firmware of the device. In some embodiments, measurements (such as hashes of firmware, configuration values and anything which may influence the functionality of the device) are taken prior to transferring the device to the dealer or the second owner and after the device is transferred to the second owner to ensure that the device has not been tampered with using a man-in-the-middle attack.

The intermediate private key supplied to the second owner signing service is used to sign and load the new owner ROT credentials on the device. The new owner credentials then replace the intermediate credentials, e.g., the intermediate public key.

### SYSTEM DESCRIPTION

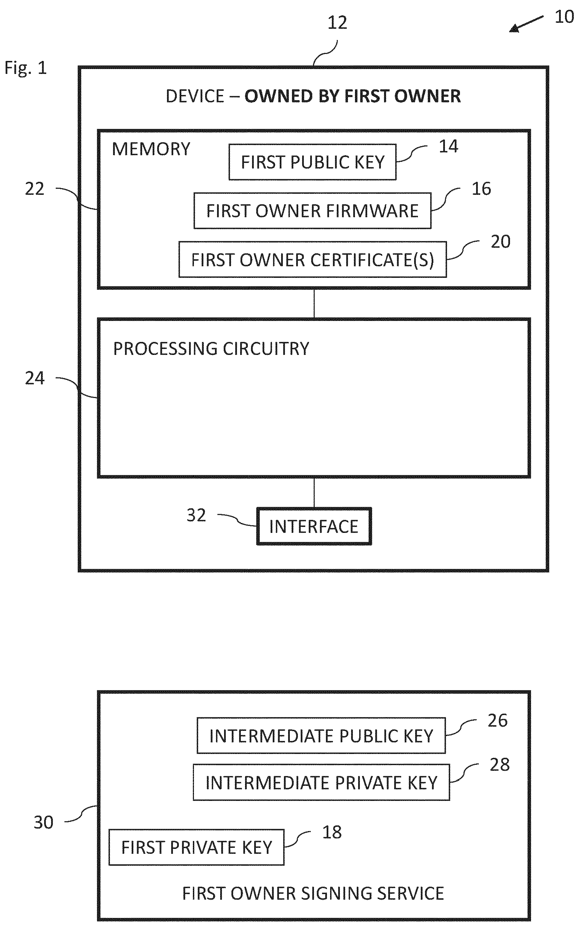

Reference is now made to Fig. 1, which is a block diagram view of an ownership transfer system 10 constructed and operative in accordance with an embodiment of the present invention.

The system 10 includes a device 12, currently owned by a first owner. The device 12 includes a memory 22 configured to store: a first public key 14 indicating security ownership of the device 12 by the first owner; first owner firmware 16 (signed by a private key corresponding to a public key of a leaf certificate in a certificate chain with a root certificate of the first owner); and at least one first owner certificate 20 (which prior to being loaded into the device 12, a signed container of the first owner certificate(s) 20 is verified by the first public key 14 of the first owner). The first public key 14 and the first private key 18 form a first key pair. It should be noted that other credentials, such as the first owner certificate(s) 20 also indicate security ownership of the device 12.

The device 12 includes processing circuitry 24, which is configured to prevent loading of any public key unauthenticated by a given loaded public key (e.g., the first public key 14) and allow loading of a public key signed by a given private key (e.g., the first private key 18) paired with the given loaded public key (e.g., the first public key 14). As will be explained in more detail below, once a public key is authenticated and loaded into the memory 22, the newly loaded public key may be used to authenticate another public key signed by a private key corresponding to the loaded public key.

In practice, some or all of the functions of the processing circuitry 24 may be combined in a single physical component or, alternatively, implemented using multiple physical components. These physical components may comprise hard-wired or programmable devices, or a combination of the two. In some embodiments, at least some of the functions of the processing circuitry 24 may be carried out by a programmable processor under the control of suitable software. This software may be downloaded to a device in electronic form, over a network, for example. Alternatively, or additionally, the software may be stored in tangible, non-transitory computer-readable storage media, such as optical, magnetic, or electronic memory.

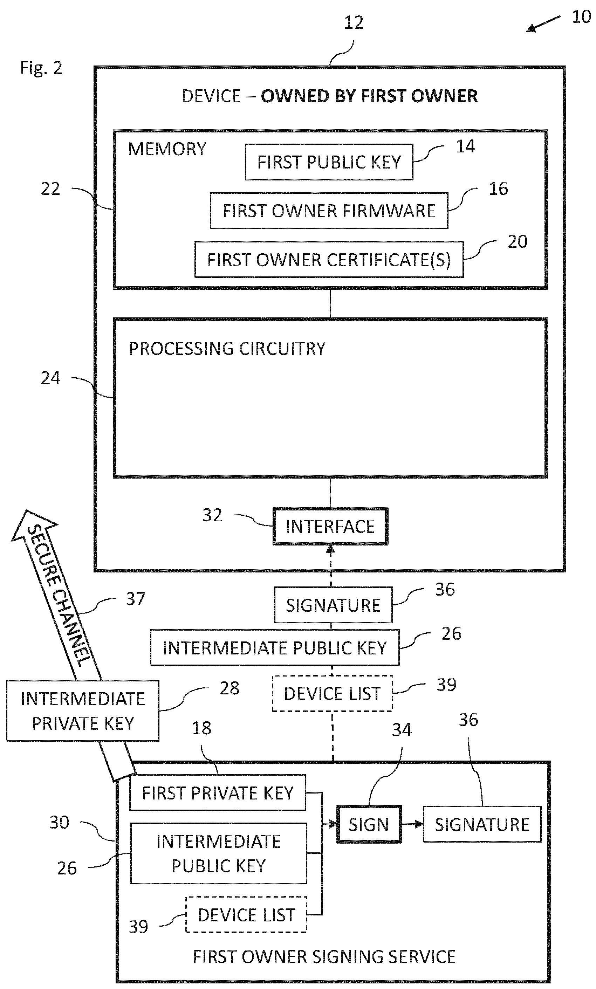

A first owner signing service 30 is configured to generate an intermediate key pair formed from an intermediate public key 26 and an intermediate private key 28 using any suitable public key infrastructure. Reference is made below to Figs. 2-4, which are block diagram views of the system 10 of Fig. 1 showing preparation of the device 12 for ownership transfer.

Reference is now made to Fig. 2. In some embodiments, in order to restrict device ownership transfer to a given device or multiple given devices, a device list 39 is prepared including one or more device identifications (e.g., serial numbers or MAC addresses) of the device(s) for which device ownership is to be performed. The first owner signing service 30 is configured to: sign (block 34) the intermediate public key 26 and optionally the device list 39 with the first private key 18 yielding a signature 36; and provide the signature 36, the intermediate public key 26, and optionally the device list 39, to the device 12 directly or via another entity such as an administrative entity of the first owner (not shown), which receives the intermediate public key 26, the signature 36, and optionally the device list 39, from the first owner signing service 30 and provides the intermediate public key 26, the signature 36, and optionally the device list 39 to the device 12. The interface 32 is configured to receive the intermediate public key 26, the signature 36, and optionally the device list 39. In some embodiments, the intermediate private key 28 is provided to the second owner (optionally via a dealer) using a secure channel 37.

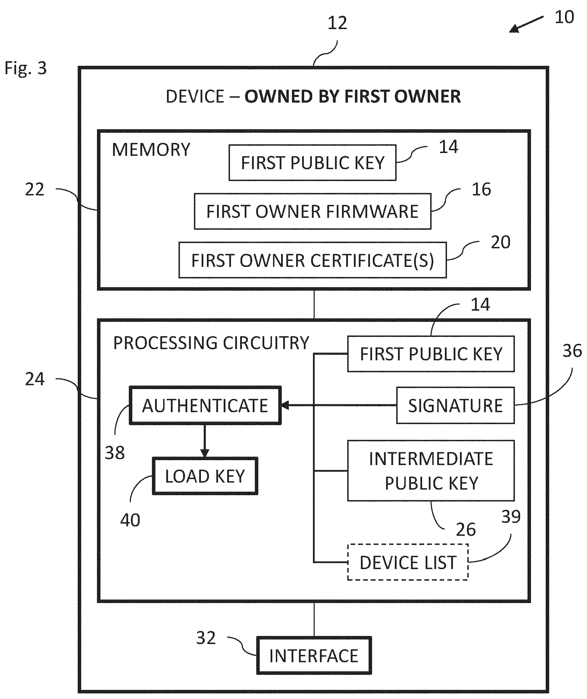

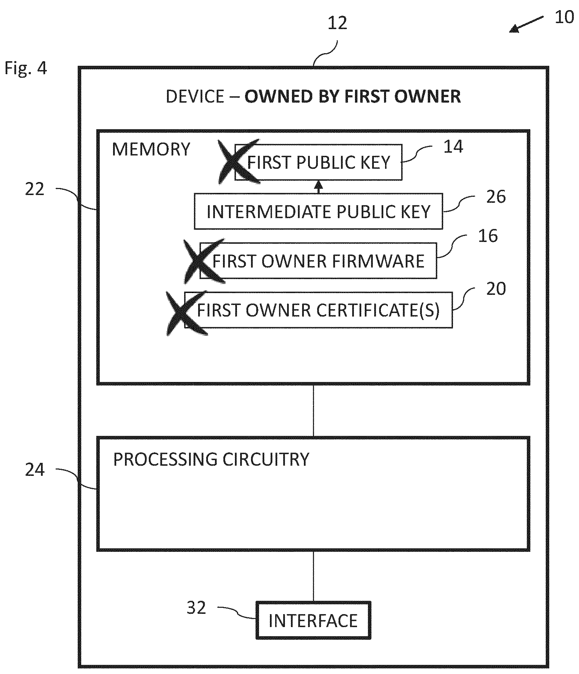

Reference is now made to Fig. 3. The processing circuitry 24 is configured to authenticate (block 38) the signature 36 of the intermediate public key 26, and optionally the device list 39, with the first public key 14 loaded in the memory 22. In response to authenticating the signature 36, the processing circuitry 24 is configured to load (block 40) the intermediate public key 26 in the memory 22, described in more detail with reference to Fig. 4.

Reference is now made to Fig. 4. The processing circuitry 24 is configured to load the intermediate public key 26 in the memory 22 in preparation for transferring ownership of the device 12 from the first owner, responsively to authenticating the signature 36 (Fig. 3) of the intermediate public key 26 with the first public key 14. The processing circuitry 24 is also configured to remove the first public key 14 from the memory 22. In some embodiments, the processing circuitry 24 is configured to overwrite the first public key 14 in the memory 22 with the intermediate public key 26 while loading the intermediate public key 26 in the memory 22. The processing circuitry 24 is also configured to securely store the intermediate public key 26 in the memory 22. In some embodiments, the intermediate public key 26 may be securely stored in non-volatile memory of the device 12 using encryption and/or only be accessible by internal secure firmware of the device 12.

The processing circuitry 24 is configured (e.g., triggered by the administrative entity of the first owner) to remove other credentials and private data of the first owner. In some embodiments, the processing circuitry 24 is configured to purge the first owner firmware 16 and first owner certificate(s) 20 from the memory 22.

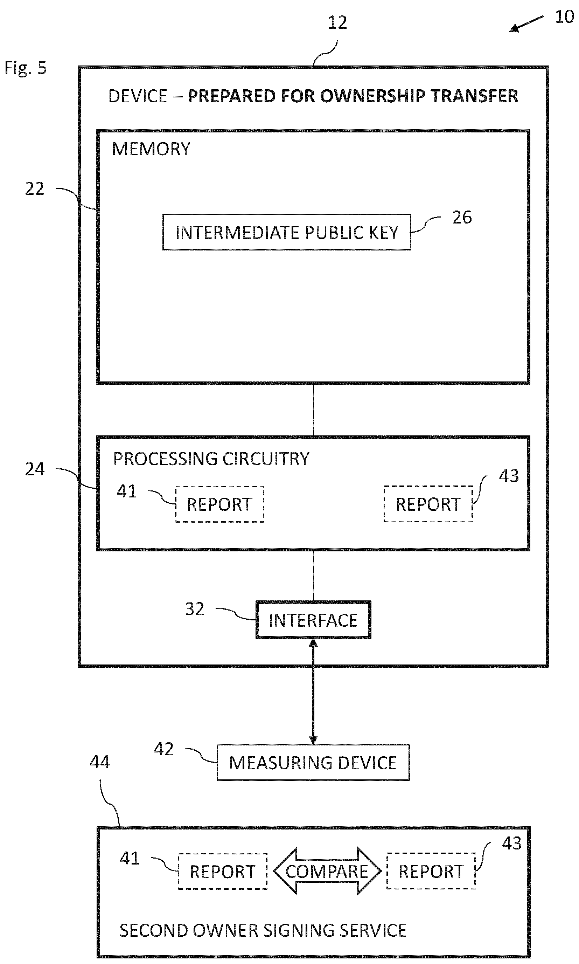

Reference is now made to Fig. 5, which is a block diagram view of the system 10 of Fig. 1 showing the device 12 prepared for ownership transfer. Fig. 5 shows that the device 12 has been purged of credentials and other private data of the first owner. The memory 22 is storing the intermediate public key 26.

In some embodiments, measurements (such as hashes of firmware, configuration values and anything which may influence the functionality of the device 12) are taken prior to transferring the device 12 to the dealer or the second owner and after the device 12 is transferred to the second owner to ensure that the device 12 has not been tampered with using a man-in-the-middle attack. Therefore, in some embodiments, system 10 includes a measuring device 42 configured to: perform measurements on the device 12 before and after transferring the ownership of the device 12; and compare the measurements performed before and after transferring ownership of the device 12 to confirm that the device 12 has not been tampered with based on the measurements being unchanged. The measurement device used to perform measurements before transfer of ownership may not be the same measurement device used to perform measurements after transfer of ownership.

In some embodiments, the processing circuitry 24 is configured to perform measurements of the device 12 before and after transferring the ownership of the device 12. In some embodiments the processing circuitry 24 is configured to: perform first measurements (e.g., using Security Protocols and Data Models (SPDM) attestation) of the device 12 before transferring the ownership of the device 12; sign the first measurements using a private key; provide a first report 41 of the signed first measurements to the second owner signing service 44 (e.g. via the first owner signing service 30 or the dealer or the secure channel 37 or directly to the second owner signing service 44); perform second measurements of the device 12 after transferring the ownership of the device 12; sign the second measurements using a private key; and provide a second report 43 of the signed second measurements to the second owner signing service 44. The second owner signing service 44 is configured to authenticate the first and second reports 41, 43 using a public key (or keys) and compare the first report 41 to the second report 43 to confirm that the device 12 has not been tampered with.

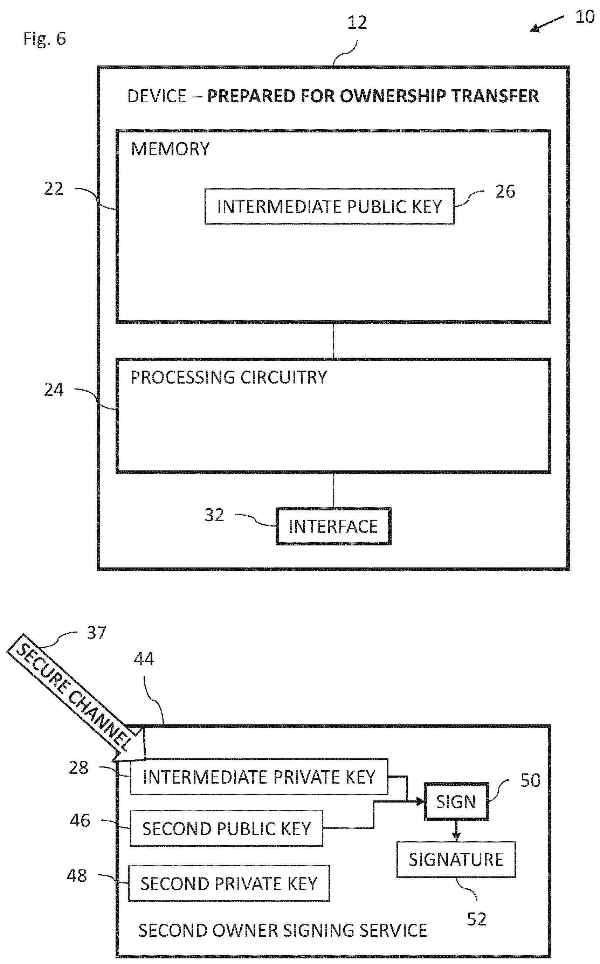

Reference is made below to Figs. 6-9, which are block diagrams views of the system 10 of Fig. 1 showing the device 12 ownership being transferred to the second owner.

Reference is now made to Fig. 6. In some embodiments, the intermediate private key 28 is provided to a second owner signing service 44 from the first owner signing service 30 (optionally via the dealer) using secure channel 37.

The second owner signing service 44 is configured to: generate the second key pair including the second public key 46 and the second private key 48; and sign (block 50) the second public key 46 with the intermediate private key 26 yielding a signature 52.

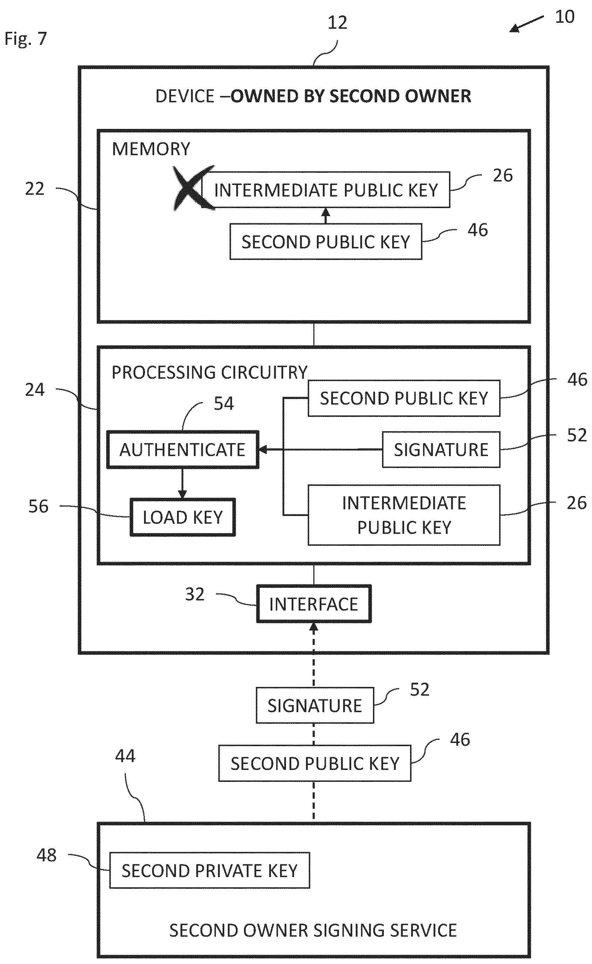

Reference is now made to Fig. 7. The second owner signing service 44 is configured to provide the second public key 46 and the signature 52 of the second public key 46 to the device 12 directly or via the administrative entity of the second owner. The interface 32 is configured to receive from the second public key 46 and the signature 52 (of the second public key 46 signed with the intermediate private key 28 by the second owner signing service 44). The processing circuitry 24 is configured to authenticate (block 54) the signature 52 of the second public key 46 using the intermediate public key 26. The processing circuitry 24 is configured to: load (block 56) the second public key 46 in the memory 22 indicating ownership of the device 12 has been transferred to the second owner responsively to authenticating the signature 52 of the second public key 46 with the intermediate public key 26; and remove the intermediate public key 26 from the memory 22. In some embodiments, the processing circuitry 24 is configured to overwrite the intermediate public key 26 in the memory 22 with the second public key 46 while loading the second public key 46 in the memory 22.

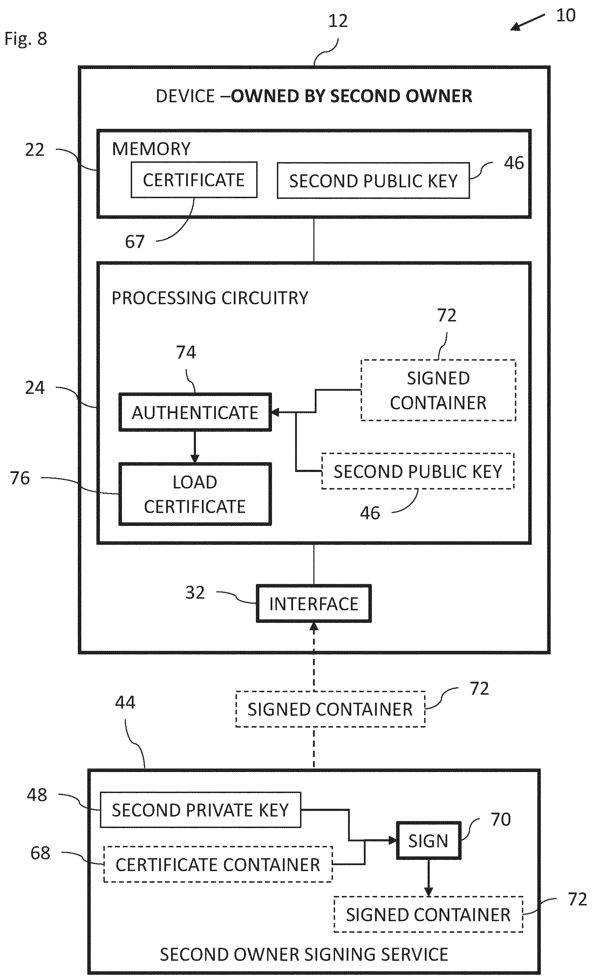

Reference is now made to Fig. 8. The administrative entity of the second owner may want to add load a certificate 67 onto the device 12. The certificate 67 may have an embedded signature which is not necessarily signed by the second private key 48. The certificate 67 may be self-signed (i.e., have a signature by a key corresponding to the public key embedded in the certificate 67, but different from the second public key 46). The certificate 67 is loaded to the device 12 using a container 68, which is signed by the second private key 48 and is thus validated by the second public key 46 already loaded to the device 12, as described in more detail below.

The second owner signing service 44 is configured to sign (block 70) the certificate container 68 with the second private key 48 yielding a signed certificate container 72. The second owner signing service 44 is configured to provide the signed certificate 72 to the device 12 directly or via the administrative entity of the second owner. The interface 32 is configured to receive the signed certificate container 72 signed with the second private key 48. The processing circuitry 24 is configured to authenticate (block 74) the signed certificate container 72 using the second public key 46; and load (block 76) the certificate 67 associated with the signed certificate container 72 in the memory 22 responsively to the signed certificate 72 being authenticated.

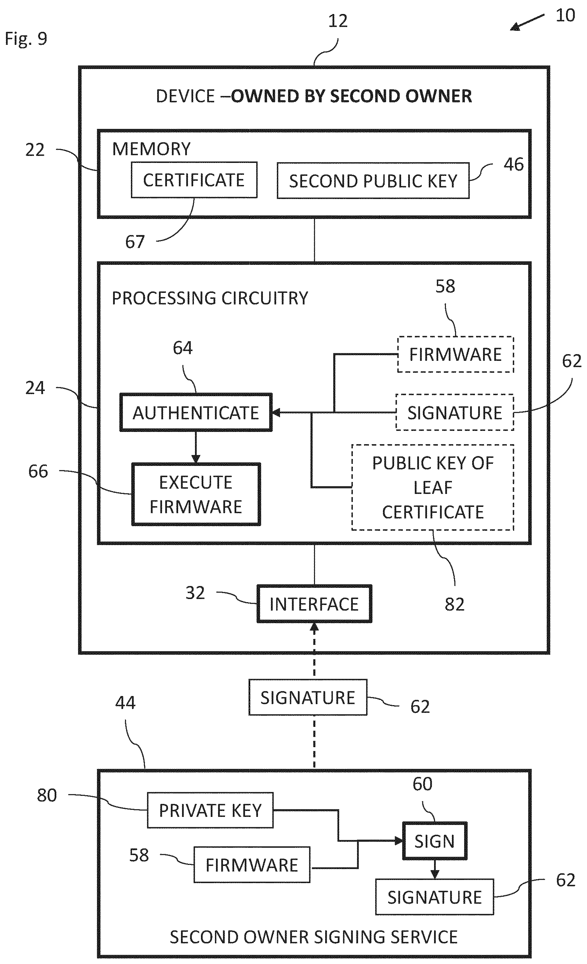

Reference is now made to Fig. 9. The second owner (e.g., the administrative entity of the second owner) provides firmware 58 to the second owner signing service 44 with a request for the second owner signing service 44 to sign the firmware 58 with a private key 80 corresponding to a public key 82 of a leaf certificate (not shown) in a certificate chain with a root certificate (e.g., the certificate 67) of the second owner.

The second owner signing service 44 is configured to receive the firmware 58 and sign (block 60) the firmware 58 with the private key 80 corresponding to the public key 82 of the leaf certificate in the certificate chain with the root certificate of the second owner yielding a signature 62, which the second owner signing service 44 is configured to provide to the device 12 via the administrative entity of the second owner or directly via the interface 32. The interface 32 is configured to receive the signature 62 of the firmware 58. The processing circuitry is configured to: authenticate (block 64) the signature 62 of the firmware 58 using the public key 82 of the leaf certificate; and store the firmware 58 in the memory 22 for later execution of the firmware 58 responsively to authenticating the signature 62 of firmware 58; or execute (block 66) the firmware 58 responsively to authenticating the signature 62 of firmware 58.

Various features of the invention which are, for clarity, described in the contexts of separate embodiments may also be provided in combination in a single embodiment. Conversely, various features of the invention which are, for brevity, described in the context of a single embodiment may also be provided separately or in any suitable sub-combination.

The embodiments described above are cited by way of example, and the present invention is not limited by what has been particularly shown and described hereinabove. Rather the scope of the invention includes both combinations and sub-combinations of the various features described hereinabove, as well as variations and modifications thereof which would occur to persons skilled in the art upon reading the foregoing description and which are not disclosed in the prior art.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. A system (10) comprising:
a device (12) including:
a memory (22) to store a first public key (14) indicating security ownership of the device by a first owner;
an interface (32) to receive a signature of an intermediate public key (26) signed by a first owner signing service (30) with a first private key (18), which forms a first key pair with the first public key; and
processing circuitry (24) to:
load the intermediate public key in the memory in preparation for transferring ownership of the device from the first owner, responsively to authenticating the signature of the intermediate public key with the first public key; and
remove the first public key from the memory;
and wherein:
the interface is to receive a second public key (46) and a signature of the second public key signed by a second owner signing service (44) with an intermediate private key (28), which forms an intermediate key pair with the intermediate public key, the second public key and a second private key (48) forming a second key pair;
the processing circuitry is to load the second public key in the memory indicating ownership of the device has been transferred to the second owner responsively to authenticating the signature of the second public key with the intermediate public key; and
the processing circuitry is to remove the intermediate public key from the memory; and
the first owner signing service, wherein the first owner signing service is to:
sign the intermediate public key with the first private key; and
provide the intermediate private key to the second owner signing service using a secure channel (37); and
the second owner signing service, wherein the second owner signing service is to:
generate the second key pair;
sign the second public key with the intermediate private key; and
provide the second public key and the signature of the second public key to the device.

2. The system according to claim 1, wherein the processing circuitry is to overwrite the first public key in the memory with the intermediate public key while loading the intermediate public key in the memory.

3. The system according to claim 1 or 2, wherein the processing circuitry is to prevent loading of any public key unauthenticated by a given loaded public key; and allows loading of a public key signed by a given private key paired with the given loaded public key.

4. The system according to claim 1, 2, or 3, wherein the processing circuitry is to purge firmware and certificates signed by the first private key from the memory.

5. The system according to any preceding claim, wherein the processing circuitry is to overwrite the intermediate public key in the memory with the second public key while loading the second public key in the memory.

6. The system according to any preceding claim, wherein:
the interface is to receive a certificate container (72) signed with the second private key; and
the processing circuitry is to load a certificate (67) associated with the signed certificate container in the memory.

7. The system according to any preceding claim, wherein:
the interface is to receive a signature (62) of the firmware (58); and
the processing circuitry is to store the firmware in the memory or execute the firmware, responsively to authenticating the signature of firmware with a public key (82) of a leaf certificate in a certificate chain with a root certificate of the second owner.

8. The system according to any preceding claim, further comprising a measuring device (42) to:
perform measurements on the device after transferring the ownership of the device; and
compare the measurements performed after transferring ownership of the device to measurements performed before transferring ownership of the device to confirm that the device has not been tampered with.

9. The system according to any preceding claim, wherein the processing circuitry is to:
perform first measurements of the device before transferring the ownership of the device;
sign the first measurements;
provide a first report (41) of the signed first measurements to the second owner signing service;
perform second measurements of the device after transferring the ownership of the device;
sign the second measurements; and
provide a second report (43) of the signed second measurements to the second owner signing service.

10. The system according to claim 9, wherein the second owner signing service is to compare the first report to the second report to confirm that the device has not been tampered with.

11. The system according to any preceding claim, wherein:
the interface is to receive the signature of the intermediate public key and a device list (39) signed by the first owner signing service with the first private key, the device list including a device identification of the device; and
the processing circuitry is to load the intermediate public key in the memory in preparation for transferring ownership of the device from the first owner, responsively to authenticating the signature of the intermediate public key and the device list with the first public key.

12. The system according to claim 11, wherein the device list includes device identifications of multiple devices.

13. A control transfer method, comprising:
storing, in a memory (22) of a device (12), a first public key (14) indicating security ownership of the device by a first owner;
signing, by a first owner signing service (30), an intermediate public key (26) with a first private key (18), which forms a first key pair with the first public key;
provide the intermediate private key to a second owner signing service (44) using a secure channel (37);
receiving, at an interface of the device, a signature of the intermediate public key (26) signed by the first owner signing service with the first private key;
loading the intermediate public key in the memory of the device in preparation for transferring ownership of the device from the first owner, responsively to authenticating the signature of the intermediate public key with the first public key;
removing the first public key from the memory;
generating, by a second owner signing service, a second key pair;
signing, by the second owner signing service, the second public key (46) with the intermediate private key; and
providing, by the second owner signing service, the second public key and the signature of the second public key to the device;
receiving, at the device, the second public key and the signature of the second public key signed by the second owner signing service with the intermediate private key, which forms an intermediate key pair with the intermediate public key, the second public key and a second private key (48) forming the second key pair;
loading the second public key in the memory indicating ownership of the device has been transferred to the second owner responsively to authenticating the signature of the second public key with the intermediate public key; and
removing the intermediate public key from the memory.

## Patentansprüche

1. System (10), umfassend:
eine Vorrichtung (12), enthaltend:
einen Speicher (22) zum Speichern eines ersten öffentlichen Schlüssels (14), der den Sicherheitsbesitz der Vorrichtung durch einen ersten Besitzer anzeigt;
eine Schnittstelle (32) zum Empfangen einer Signatur eines öffentlichen Zwischenschlüssels (26), der von einem ersten Besitzersignaturdienst (30) mit einem ersten privaten Schlüssel (18) signiert wurde und mit dem ersten öffentlichen Schlüssel ein erstes Schlüsselpaar ausbildet; und
eine Verarbeitungsschaltung (24) zum:
Laden des öffentlichen Zwischenschlüssels in den Speicher, um die Übertragung des Besitzes der Vorrichtung von dem ersten Besitzer als Reaktion auf die Authentifizierung der Signatur des öffentlichen Zwischenschlüssels mit dem ersten öffentlichen Schlüssel vorzubereiten; und Entfernen des ersten öffentlichen Schlüssels aus dem Speicher;
und wobei:
die Schnittstelle einen zweiten öffentlichen Schlüssel (46) und eine Signatur des zweiten öffentlichen Schlüssels empfangen soll, die von einem zweiten Besitzersignaturdienst (44) mit einem privaten Zwischenschlüssel (28) signiert wurde, der mit dem öffentlichen Zwischenschlüssel ein Zwischenschlüsselpaar ausbildet, wobei der zweite öffentliche Schlüssel und ein zweiter privater Schlüssel (48) ein zweites Schlüsselpaar ausbilden;
die Verarbeitungsschaltung den zweiten öffentlichen Schlüssel in den Speicher laden soll, um anzuzeigen, dass der Besitz der Vorrichtung auf den zweiten Besitzer als Reaktion auf die Authentifizierung der Signatur des zweiten öffentlichen Schlüssels mit dem öffentlichen Zwischenschlüssel übertragen worden ist; und
die Verarbeitungsschaltung den öffentlichen Zwischenschlüssel aus dem Speicher entfernen soll; und
den ersten Besitzersignaturdienst, wobei der erste Besitzersignaturdienst:
den öffentlichen Zwischenschlüssel mit dem ersten privaten Schlüssel signieren soll; und
den privaten Zwischenschlüssel unter Verwendung eines sicheren Kanals (37) dem zweiten Besitzersignaturdienst bereitstellen soll; und
den zweiten Besitzersignaturdienst, wobei der zweite Besitzersignaturdienst:
das zweite Schlüsselpaar erzeugen soll;
den zweiten öffentlichen Schlüssel mit dem privaten Zwischenschlüssel signieren soll; und
den zweiten öffentlichen Schlüssel und die Signatur des zweiten öffentlichen Schlüssels der Vorrichtung bereitstellen soll.

2. System nach Anspruch 1, wobei die Verarbeitungsschaltung den ersten öffentlichen Schlüssel in dem Speicher mit dem öffentlichen Zwischenschlüssel überschreiben soll, während der öffentliche Zwischenschlüssel in den Speicher geladen wird.

3. System nach Anspruch 1 oder 2, wobei die Verarbeitungsschaltung das Laden eines beliebigen öffentlichen Schlüssels verhindern soll, der nicht durch einen gegebenen geladenen öffentlichen Schlüssel authentifiziert ist; und das Laden eines öffentlichen Schlüssels ermöglicht, der durch einen gegebenen privaten Schlüssel signiert ist, der mit dem gegebenen geladenen öffentlichen Schlüssel gepaart ist.

4. System nach Anspruch 1, 2 oder 3, wobei die Verarbeitungsschaltung Firmware und mit dem ersten privaten Schlüssel signierte Zertifikate aus dem Speicher löschen soll.

5. System nach einem der vorhergehenden Ansprüche, wobei die Verarbeitungsschaltung den öffentlichen Zwischenschlüssel in dem Speicher mit dem zweiten öffentlichen Schlüssel überschreiben soll, während der zweite Schlüssel in den Speicher geladen wird.

6. System nach einem der vorhergehenden Ansprüche, wobei:
die Schnittstelle einen mit dem zweiten privaten Schlüssel signierten Zertifikatscontainer (72) empfangen soll; und
die Verarbeitungsschaltung ein Zertifikat (67) laden soll, das dem signierten Zertifikatscontainer in dem Speicher zugeordnet ist.

7. System nach einem der vorhergehenden Ansprüche, wobei:
die Schnittstelle eine Signatur (62) der Firmware (58) empfangen soll; und
die Verarbeitungsschaltung als Reaktion auf die Authentifizierung der Signatur der Firmware mit einem öffentlichen Schlüssel (82) eines Blattzertifikats in einer Zertifikatskette mit einem Stammzertifikat des zweiten Besitzers die Firmware in dem Speicher speichern soll oder die Firmware ausführen soll.

8. System nach einem der vorhergehenden Ansprüche, ferner umfassend eine Messvorrichtung (42) zum:
Durchführen von Messungen auf der Vorrichtung nach dem Übertragen des Besitzes der Vorrichtung; und
Vergleichen der Messungen, die nach dem Übertragen des Besitzes der Vorrichtung durchgeführt wurden, mit Messungen, die vor dem Übertragen des Besitzes der Vorrichtung durchgeführt wurden, um zu bestätigen, dass die Vorrichtung nicht manipuliert worden ist.

9. System nach einem der vorhergehenden Ansprüche, wobei die Verarbeitungsschaltung:
erste Messungen der Vorrichtung durchführen soll, bevor der Besitz der Vorrichtung übertragen wird;
die ersten Messungen signieren soll;
einen ersten Bericht (41) über die signierten ersten Messungen an den zweiten Besitzersignaturdienst bereitstellen soll;
zweite Messungen der Vorrichtung durchführen soll, nachdem der Besitz der Vorrichtung übertragen wurde;
die zweiten Messungen signieren soll; und
einen zweiten Bericht (43) über die signierten zweiten Messungen an den zweiten Besitzersignaturdienst bereitstellen soll.

10. System nach Anspruch 9, wobei der zweite Besitzersignaturdienst den ersten Bericht mit dem zweiten Bericht vergleichen soll, um zu bestätigen, dass die Vorrichtung nicht manipuliert worden ist.

11. System nach einem der vorhergehenden Ansprüche, wobei:
die Schnittstelle die Signatur des öffentlichen Zwischenschlüssels und eine Vorrichtungsliste (39) empfangen soll, die von dem ersten Besitzersignaturdienst mit dem ersten privaten Schlüssel signiert wurde, wobei die Vorrichtungseliste eine Vorrichtungsidentifikation der Vorrichtung enthält; und
die Verarbeitungsschaltung den öffentlichen Zwischenschlüssel in den Speicher laden soll, um die Übertragung des Besitzes der Vorrichtung von dem ersten Besitzer als Reaktion auf die Authentifizierung der Signatur des öffentlichen Zwischenschlüssels und der Vorrichtungsliste mit dem ersten öffentlichen Schlüssel vorzubereiten.

12. System nach Anspruch 11, wobei die Vorrichtungsliste Vorrichtungsidentifikationen mehrerer Vorrichtungen enthält.

13. Steuerübertragungsverfahren, umfassend:
Speichern in einem Speicher (22) einer Vorrichtung (12) eines ersten öffentlichen Schlüssels (14), der den Sicherheitsbesitz der Vorrichtung durch einen ersten Besitzer anzeigt;
Signieren durch einen ersten Besitzersignaturdienst (30) eines öffentlichen Zwischenschlüssels (26) mit einem ersten privaten Schlüssel (18), der mit dem ersten öffentlichen Schlüssel ein erstes Schlüsselpaar ausbildet;
Bereitstellen des privaten Zwischenschlüssels einem zweiten Besitzersignaturdienst (44) unter Verwendung eines sicheren Kanals (37);
Empfangen an einer Schnittstelle der Vorrichtung einer Signatur des öffentlichen Zwischenschlüssels (26), die von dem ersten Besitzersignaturdienst mit dem ersten privaten Schlüssel signiert wurde;
Laden des öffentlichen Zwischenschlüssels in den Speicher der Vorrichtung, um die Übertragung des Besitzes der Vorrichtung von dem ersten Besitzer als Reaktion auf die Authentifizierung der Signatur des öffentlichen Zwischenschlüssels mit dem ersten öffentlichen Schlüssel vorzubereiten;
Entfernen des ersten öffentlichen Schlüssels aus dem Speicher;
Erzeugen durch einen zweiten Besitzersignaturdienst eines zweiten Schlüsselpaares;
Signieren durch den zweiten Besitzersignaturdienst des zweiten öffentlichen Schlüssels (46) mit dem privaten Zwischenschlüssel; und
Bereitstellen durch den zweiten Besitzersignaturdienst des zweiten öffentlichen Schlüssels und der Signatur des zweiten öffentlichen Schlüssels an die Vorrichtung;
Empfangen an der Vorrichtung des zweiten öffentlichen Schlüssels und der Signatur des zweiten öffentlichen Schlüssels, die von dem zweiten Besitzersignaturdienst mit dem privaten Zwischenschlüssel signiert wurde, der mit dem öffentlichen Zwischenschlüssel ein Zwischenschlüsselpaar ausbildet, wobei der zweite öffentliche Schlüssel und ein zweiter privater Schlüssel (48) das zweite Schlüsselpaar ausbilden;
Laden des zweiten öffentlichen Schlüssels in den Speicher, der anzeigt, dass der Besitz der Vorrichtung an den zweiten Besitzer als Reaktion auf die Authentifizierung der Signatur des zweiten öffentlichen Schlüssels mit dem öffentlichen Zwischenschlüssel übertragen worden ist; und
Entfernen des öffentlichen Zwischenschlüssels aus dem Speicher.

## Revendications

1. Système (10) comprenant :
un dispositif (12) comprenant :
une mémoire (22) pour stocker une première clé publique (14) indiquant une propriété de sécurité du dispositif par un premier propriétaire ;
une interface (32) pour recevoir une signature d'une clé publique intermédiaire (26) signée par un service de signature de premier propriétaire (30) avec une première clé privée (18) qui forme une première paire de clés avec la première clé publique ; et
une circuiterie de traitement (24) pour :
charger la clé publique intermédiaire dans la mémoire en préparation d'un transfert de propriété du dispositif depuis le premier propriétaire, en réponse à l'authentification de la signature de la clé publique intermédiaire avec la première clé publique ; et
supprimer la première clé publique de la mémoire ;
et :
l'interface servant à recevoir une seconde clé publique (46) et une signature de la seconde clé publique signée par un service de signature de second propriétaire (44) avec une clé privée intermédiaire (28) qui forme une paire de clés intermédiaire avec la clé publique intermédiaire, la seconde clé publique et une seconde clé privée (48) formant une seconde paire de clés ;
la circuiterie de traitement servant à charger la seconde clé publique dans la mémoire, ce qui indique qu'une propriété du dispositif a été transférée au second propriétaire en réponse à l'authentification de la signature de la seconde clé publique avec la clé publique intermédiaire ; et
la circuiterie de traitement servant à supprimer la clé publique intermédiaire de la mémoire ; et
le service de signature de premier propriétaire, le service de signature de premier propriétaire servant à :
signer la clé publique intermédiaire avec la première clé privée ; et
fournir la clé privée intermédiaire au service de signature de second propriétaire au moyen d'un canal sécurisé (37) ; et
le service de signature de second propriétaire, le service de signature de second propriétaire servant à :
générer la seconde paire de clés ;
signer la seconde clé publique avec la clé privée intermédiaire ; et
fournir la seconde clé publique et la signature de la seconde clé publique au dispositif.

2. Système selon la revendication 1, la circuiterie de traitement servant à écraser la première clé publique dans la mémoire avec la clé publique intermédiaire tout en chargeant la clé publique intermédiaire dans la mémoire.

3. Système selon la revendication 1 ou 2, la circuiterie de traitement servant à empêcher le chargement de toute clé publique non authentifiée par une clé publique chargée donnée ; et permettant le chargement d'une clé publique signée par une clé privée donnée appariée avec la clé publique chargée donnée.

4. Système selon la revendication 1, 2 ou 3, la circuiterie de traitement servant à purger de la mémoire un micrologiciel et des certificats signés par la première clé privée.

5. Système selon l'une quelconque des revendications précédentes, la circuiterie de traitement servant à écraser la clé publique intermédiaire dans la mémoire avec la seconde clé publique tout en chargeant la seconde clé publique dans la mémoire.

6. Système selon l'une quelconque des revendications précédentes,
l'interface servant à recevoir un conteneur de certificat (72) signé avec la seconde clé privée ; et
la circuiterie de traitement servant à charger dans la mémoire un certificat (67) associé au conteneur de certificat signé.

7. Système selon l'une quelconque des revendications précédentes,
l'interface servant à recevoir une signature (62) du micrologiciel (58) ; et
la circuiterie de traitement servant à stocker le micrologiciel dans la mémoire ou à exécuter le micrologiciel, en réponse à l'authentification de la signature du micrologiciel avec une clé publique (82) d'un certificat feuille dans une chaîne de certificats avec un certificat racine du second propriétaire.

8. Système selon l'une quelconque des revendications précédentes, comprenant en outre un dispositif de mesure (42) pour :
réaliser des mesures sur le dispositif après le transfert de la propriété du dispositif ; et
comparer les mesures réalisées après le transfert de propriété du dispositif à des mesures réalisées avant le transfert de propriété du dispositif pour confirmer que le dispositif n'a pas été altéré.

9. Système selon l'une quelconque des revendications précédentes, la circuiterie de traitement servant à :
réaliser des premières mesures du dispositif avant le transfert de la propriété du dispositif ;
signer les premières mesures ;
fournir un premier rapport (41) des premières mesures signées au service de signature de second propriétaire ;
réaliser des secondes mesures du dispositif après le transfert de la propriété du dispositif ;
signer les secondes mesures ; et
fournir un second rapport (43) des secondes mesures signées au service de signature de second propriétaire.

10. Système selon la revendication 9, le service de signature de second propriétaire servant à comparer le premier rapport au second rapport pour confirmer que le dispositif n'a pas été altéré.

11. Système selon l'une quelconque des revendications précédentes,
l'interface servant à recevoir la signature de la clé publique intermédiaire et une liste de dispositifs (39) signés par le service de signature de premier propriétaire avec la première clé privée, la liste de dispositifs comprenant une identification de dispositif du dispositif ; et
la circuiterie de traitement servant à charger la clé publique intermédiaire dans la mémoire en préparation d'un transfert de propriété du dispositif depuis le premier propriétaire, en réponse à l'authentification de la signature de la clé publique intermédiaire et de la liste de dispositifs avec la première clé publique.

12. Système selon la revendication 11, la liste de dispositifs comprenant des identifications de dispositif de multiples dispositifs.

13. Procédé de transfert de commande, consistant à :
stocker, dans une mémoire (22) d'un dispositif (12), une première clé publique (14) indiquant une propriété de sécurité du dispositif par un premier propriétaire ;
signer, par un service de signature de premier propriétaire (30), une clé publique intermédiaire (26) avec une première clé privée (18) qui forme une première paire de clés avec la première clé publique ;
fournir la clé privée intermédiaire à un service de signature de second propriétaire (44) au moyen d'un canal sécurisé (37) ;
recevoir, au niveau d'une interface du dispositif, une signature de la clé publique intermédiaire (26) signée par le service de signature de premier propriétaire avec la première clé privée ;
charger la clé publique intermédiaire dans la mémoire du dispositif en préparation d'un transfert de propriété du dispositif depuis le premier propriétaire, en réponse à l'authentification de la signature de la clé publique intermédiaire avec la première clé publique ;
supprimer la première clé publique de la mémoire ;
générer, par un service de signature de second propriétaire, une seconde paire de clés ;
signer, par le service de signature de second propriétaire, la seconde clé publique (46) avec la clé privée intermédiaire ; et
fournir, par le service de signature de second propriétaire, la seconde clé publique et la signature de la seconde clé publique au dispositif ;
recevoir, au niveau du dispositif, la seconde clé publique et la signature de la seconde clé publique signée par le service de signature de second propriétaire avec la clé privée intermédiaire qui forme une paire de clés intermédiaire avec la clé publique intermédiaire, la seconde clé publique et une seconde clé privée (48) formant la seconde paire de clés ;
charger la seconde clé publique dans la mémoire, ce qui indique qu'une propriété du dispositif a été transférée au second propriétaire en réponse à l'authentification de la signature de la seconde clé publique avec la clé publique intermédiaire ; et
supprimer la clé publique intermédiaire de la mémoire.
